**Europäisches Patentamt**

**European Patent Office**

**Office européen des brevets**

(19)

(11) Veröffentlichungsnummer: **0 351 532 B1**

(12) **EUROPÄISCHE PATENTSCHRIFT**

(45) Veröffentlichungstag der Patentschrift:
**11.09.91 Patentblatt 91/37**

(51) Int. Cl.⁵: **H04B 7/08**

(21) Anmeldenummer: **89110198.2**

(22) Anmeldetag: **06.06.89**

(54) **Leistungsaddierer.**

(30) Priorität: **20.07.88 DE 3824528**

(43) Veröffentlichungstag der Anmeldung:
**24.01.90 Patentblatt 90/04**

(45) Bekanntmachung des Hinweises auf die
Patenterteilung:
**11.09.91 Patentblatt 91/37**

(84) Benannte Vertragsstaaten:
**AT BE CH DE ES FR GB IT LI NL SE**

(56) Entgegenhaltungen:
**EP-A- 0 201 977**
**EP-A- 0 206 568**
**FREQUENZ, Band 36, Nr. 1, Januar 1982, Seiten 20-28, Berlin, DE; L. TSCHIMPKE:
"Selection-diversity bei korrelierten, ungleichen Kanälen in Feldern mit Rayleigh-Verteilung"**

(73) Patentinhaber: **RICHARD HIRSCHMANN
GMBH & CO.**
**Richard-Hirschmann-Strasse 19 Postfach 110
W-7300 Esslingen a.N. (DE)**

(72) Erfinder: **Buck, Walter, Dr.**
**Steinwaldstrasse 90**
**W-7000 Stuttgart 70 (DE)**
Erfinder: **Schenkyr, Dieter**
**Lessingstrasse 30**
**W-7312 Kirchheim (DE)**

(74) Vertreter: **Geyer, Ulrich F., Dr., Dipl.Phys. et al
Wagner & Geyer Patentanwälte Postfach 22 14
39 Gewürzmühlstrasse 5
W-8000 München 22 (DE)**

## Beschreibung

Die Erfindung betrifft einen Addierer zur Leistungsaddition von wenigstens zwei Signalen, die über unterschiedliche Wege von einer gemeinsamen Signalquelle zu einer Empfangsschaltung gelangen.

Addierer sind dafür vorgesehen, die Leistung der an ihren Eingängen anliegenden Signale zu addieren. Der Einsatz derartiger Addierer, etwa im Zusammenhang mit sogenannten Diversity-Empfangsverfahren, ist beispielsweise in der DE-OS 3737011 beschrieben. Dabei werden die Empfangssignale von mindestens zwei Antennen durch einstellbare Phasendrehglieder über eine Auswerteschaltung phasenmäßig so ausgerichtet, daß sie in einem Addierer phasenrichtig addiert werden.

Für diesen Zweck eingesetzte Addierer herkömmlicher Art haben die Eigenschaft, daß das Summensignal nur dann der Summe der Leistungen der Eingangssignale entspricht, wenn diese Eingangssignale nach Betrag und Phase gleich sind. Unterscheiden sich bei gleicher Phase, wie sie durch das Diversity-System eingestellt wird, die Amplituden der Eingangssignale jedoch, ist die Leistungsaddition eines solchen Addierers trotzdem nicht optimal, weil der Addierer nur für gleiche Eingangssignalamplituden richtig angepaßt ist.

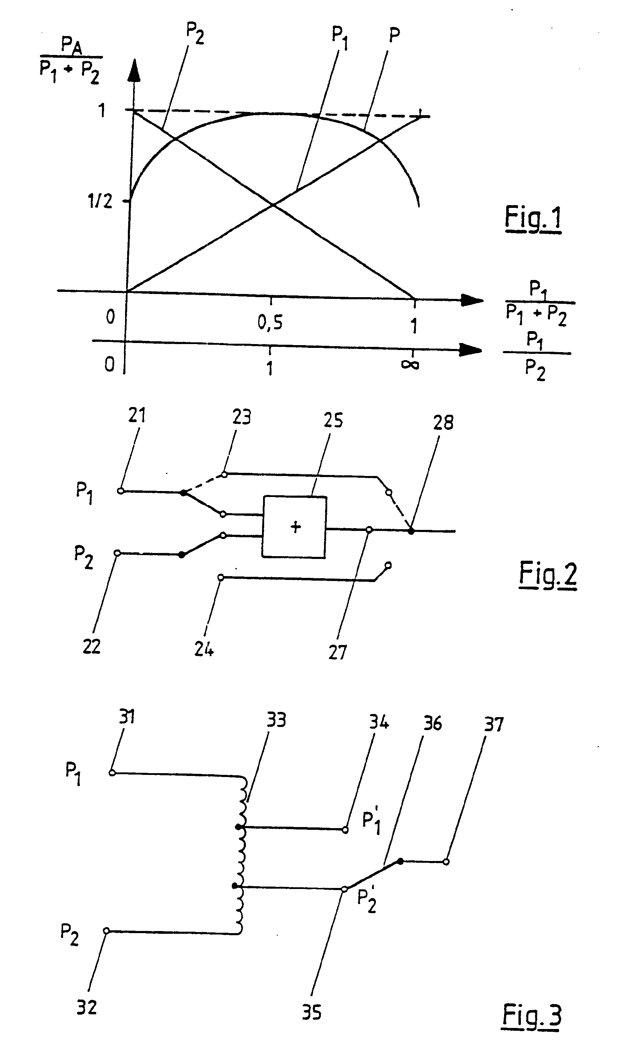

Dieser Sachverhalt ist in Fig. 1 dargestellt. Auf der Abszisse ist das Verhältnis der Eingangsleistungen $P_1/P_2$ und auf der Ordinate die Ausgangsleistung eines herkömmlichen Addierers dargestellt. Die Signalleistungen $P_1$ und $P_2$ der Eingangssignale sind durch Geraden wiedergegeben. Auf Grund der Fehlanpassung des Addierers bei nicht gleichen Eingangssignalamplituden wird ein Teil der verfügbaren Leistung auf die Eingänge reflektiert. Die Ausgangsleistung P des Addierers ist daher kleiner als die Summe der Leistungen der Eingangssignale. In Fig. 1 ist die mit P bezeichnete Kurve der Signalverlauf am Ausgang des Addierers in Abhängigkeit des Leistungsverhältnisses $P_1/P_2$ der Eingangssignale. Bei Verschwinden eines der Eingangssignale ist die Signalamplitude des Summensignals am Addiererausgang nur noch die Hälfte der algebraischen Summe der Eingangssignalleistungen. Lediglich bei gleich starken Eingangssignalen, d.h. bei einem Verhältnis $P_1/P_2 = 1$ ist die Impedanzanpassung des Addierers ideal und eine optimale Addierung möglich.

Es wurde bereits vorgeschlagen, den Addierer außer Funktion zu setzen bzw. zu umgehen, wenn an einem Eingang keine oder nur eine geringe Signalleistung anliegt. Dadurch steht das andere, stärkere Signal ohne Schwächung zur Verfügung. Dies hat jedoch den Nachteil, daß für diesen Fall entweder aufwendige Schalter benötigt werden, oder daß die Impedanzanpassung nicht korrekt ist.

Bei Anwendung eines Diversity-Verfahrens mit Kennzeichnung der komplexen Amplituden der Eingangssignale durch eine Hilfsmodulation, wie dies in der DE-OS 3737011 derselben Erfinder beschrieben ist, besteht ein weiterer Nachteil darin, daß Informationen über das abgeschaltete Signal nicht mehr vorhanden sind. Dieser Nachteil ist insbesondere für Signalverarbeitungs- und Auswerteverfahren gravierend, bei denen die eingehenden Signale ständig auf deren Eigenschaften, wie Signalstärke, Phasenversetzungen oder andere Parameter überwacht werden sollen. Es müßten daher zusätzliche Maßnahmen und Vorbereitungsschritte, wie probeweises Zu- und Abschalten, vorgesehen werden, um Informationen über das abgeschaltete Eingangssignal zu erhalten und auszuwerten. Abgesehen von einem erhöhten Schaltungsaufwand für das vermehrte Zu- und Abschalten von Signalen, ergibt sich wegen der dadurch entstehenden Knackgeräusche, beispielsweise im Falle des Diversity-Rundfunkempfangs, eine schlechtere Empfangsqualität.

Im Falle, daß die Ansteuerung digital erfolgt, ist es im Zusammenhang mit dem besagten Vorschlag, den Addierer bei Vorliegen eines sehr schwachen Signals außer Funktion zu setzen, zusätzlich von Nachteil, daß drei Schaltzustände möglich sind. Dadurch wird die digitale Auswertung bzw. Ansteuerung komplizierter.

Der Erfindung liegt daher die Aufgabe zugrunde, einen Addierer anzugeben, der die Leistungsaddition der Eingangssignale auch bei Auftreten eines schwachen Eingangssignals optimal vornimmt, und zwar auch ohne daß ein Außer-Funktion-Setzen des Addierers mit den damit verbundenen Nachteilen nötig wäre.

Ausgehend von dem eingangs genannten Addierer wird diese Aufgabe dadurch gelöst, daß der Addierer wenigstens zwei Eingänge, die mit ungleicher Gewichtung zum Ausgangssignal beitragen, aufweist, und daß ein Umschalter zum Umschalten der Gewichtung vorgesehen ist. Auf Grund der ungleich gewichteten Eingänge und der Umschaltung je nachdem, an welchem Eingang das stärkere Signal anliegt, ist eine optimale Leistungsaddition dann gegeben, wenn die Leistungen der Eingangssignale nicht gleich, sondern ein bestimmtes Verhältnis ungleich 1 aufweisen. Zwar ist in diesem Fall die Leistungsaddition für Eingangssignale mit gleichen Amplituden nicht optimal, was jedoch dadurch mehr als ausgeglichen wird, daß die Leistungsaddition über einen großen Bereich des Verhältnisses $P_1/P_2$ zwischen den Eingangsleistungen besser ist. Insbesondere im Falle, daß an einem der Eingänge ein Eingangssignal mit der Amplitude Null bzw. nahe Null anliegt, ist die Leistungsaddition mit dem erfindungsgemäßen Addierer besser als bei einem Addierer mit Eingängen gleicher Gewichtung.

Im Vergleich zu der zuvor beschriebenen Möglichkeit, den Eingang abzuschalten, an dem ein Signal mit der Amplitude Null bzw. ein sehr schwaches Signal anliegt, weist der erfindungsgemäße Addierer den Vorteil auf, daß die Impedanzanpassung bei Verwendung nur eines Umschalters erhalten bleibt. Weiterhin sind jeweils nur eine gerade Anzahl von Schaltzuständen vorhanden, so daß die digitale Steuerung wesentlich einfacher ist. Beispielsweise tritt mit nur zwei Schaltzuständen der gleiche maximale Fehler wie bei Verwendung eines herkömmlichen Addierers gleicher Gewichtung und drei Schaltzuständen auf. Die Vereinfachung zeigt sich auch darin, daß zur Codierung statt vorher zwei nunmehr nur ein Bit ausreicht.

Im Falle, daß der erfindungsgemäße Addierer im Zusammenhang mit Diversity-Empfangssystemen verwendet wird, wie sie beispielsweise in der DE-OS 3737011 beschrieben sind, ist die vollständige Information über alle Eingangssignale immer vorhanden, da keines dieser Signale abgeschaltet werden muß.

Eine besonders vorteilhafte Ausführungsform der Erfindung besteht darin, daß die Umschaltung der Gewichtung durch den Umschalter in einen bezüglich des Verhältnisses der an den Eingängen anliegenden Eingangsleistungen spiegelsymmetrischen Betriebszustand erfolgt. Auf diese Weise ergibt sich eine Leistungsaddition, die bezüglich der an den Eingängen anliegenden Eingangsleistungen und deren Verhältnisse spiegelsymmetrisch ist. Die Güte der Leistungsaddition ist mit dieser Ausführungsform über alle Leistungsverhältnisse der Eingangssignale hinweg am besten gewährleistet.

Gemäß einer Ausführungsform der Erfindung weist wenigstens ein zwischen den Eingängen des Addierers vorgesehener Übertrager wenigstens zwei unsymmetrische Abgriffe zur ungleichen Gewichtung der Eingänge des Addierers auf. Diese Ausführungsform des erfindungsgemäßen Addierers ist schaltungstechnisch besonders einfach.

Vorteilhaft ist es, wenn der wenigstens eine Umschalter die wenigstens zwei unsymmetrischen Abgriffe umschaltet. Obgleich es grundsätzlich auch möglich ist, die Eingänge vor dem wenigstens einen Übertrager mit wenigstens zwei unsymmetrischen Abgriffen oder einem sonstigen Netzwerk umzuschalten, ist die Ausführungsform, den Umschalter an den wenigstens zwei unsymmetrischen Abgriffen, also nach dem wenigstens einen zwischen den Eingängen vorgesehenen Übertrager vorzusehen, schaltungstechnisch besonders einfach.

Der wenigstens eine Umschalter kann in bekannter Weise vorzugsweise durch Dioden gebildet sein.

Das Prinzip des erfindungsgemäßen Addierers ist auch bei direkten n-fachen Addierern mit mehr als zwei Eingängen einsetzbar. Erfolgt die Addition dabei in nur einem Schritt, machen die dabei zu berücksichtigenden Drehfelder jedoch den Aufbau und die Ansteuerung kompliziert. Auch ist es schwierig, die dabei erforderlichen anderen als 180°-Phasendrehungen mit geringem Aufwand breitbandig zu realisieren. Um Addierer mit mehr als zwei Eingängen zu schaffen, ist es üblich, Addierer mit je zwei Eingängen zu kaskadieren. Gemäß einer weiteren Ausführungsform der Erfindung ist vorgesehen, daß wenigstens zwei Addierstufen kaskadiert werden, wovon wenigstens eine zwischen ungleich gewichteten Zuständen umschaltbar ist. Schaltungstechnisch ergibt sich zwischen dem Leistungsgewinn und dem Schaltungsaufwand ein optimaler Kompromiß bei Verwendung von Grundaddiererstufen, die zwei Zustände aufweisen, obgleich prinzipiell auch Addierer gemäß der vorliegenden Erfindung mit mehr als zwei Eingängen und drei und mehr Zuständen möglich sind. Der Aufbau eines Addierers mit mehr als zwei Eingängen durch die kaskadierte Verbindung von Addierergrundstufen mit zwei Zuständen ermöglicht jedoch einen sehr einfachen schaltungstechnischen Aufbau.

Insbesondere im Zusammenhang mit Diversity-Systemen, wie sie beispielsweise in der DE-OS 3737011 beschrieben sind, ist es besonders vorteilhaft, wenn ein Prozessor vorgesehen ist, der die ungleiche Gewichtung der Eingänge des Addierers einstellt, und der die ungleiche Gewichtung der entsprechenden Eingangssignale bei der weiteren Auswertung korrigiert.

Alternativ ist es in bestimmten Fällen jedoch auch möglich, keine Kompensation vorzusehen. Dadurch entsteht eine Schalthysterese, die bewirkt, daß häufige Umschaltvorgänge bei nahezu gleichen Amplituden der Eingangssignale und damit verbundene Knackgeräusche, beispielsweise in Diversity-Rundfunkempfangssystemen, verhindert werden.

Die Erfindung wird nachstehend anhand der Zeichnungen beispielsweise näher erläutert. Es zeigen :

| Fig. 1 | ein schematisches Diagramm der Ausgangsleistung eines herkömmlichen Addierers mit zwei Eingängen in Abhängigkeit vom Verhältnis der Eingangsleistungen $P_1/P_2$ ; |
| Fig. 2 | eine herkömmliche Ausführungsform zur Verbesserung der Addiereigenschaften im Zusammenhang mit einem herkömmlichen Addierer, wenn eines der Eingangssignale den Signalpegel Null bzw. nahezu Null aufweist ; |
| Fig. 3 | ein Ausführungsbeispiel eines erfindungsgemäßen Addierers mit zwei Eingängen ; |
| Fig. 4 | schematische Diagramme der Ausgangsleistungen eines erfindungsgemäßen Addierers in Abhängigkeit vom Verhältnis der Eingangsspannungen $P_1/P_2$ am Beispiel eines Addierers mit zwei Eingängen ; |
| Fig. 5 und 6 | weitere Ausführungsformen eines erfindungsgemäßen Addierers mit zwei Eingängen unter Verwendung von Schaltdioden und |
| Fig. 7 | ein Ausführungsbeispiel für einen Addierer mit vier Eingängen. |

Wie eingangs bereits anhand von Fig. 1 erläutert wurde, führen herkömmliche Addierer eine vollständige Addition der Eingangsleistungen nur dann durch, wenn die Signalamplituden der Eingangssignale gleich sind. Wird dagegen ein Signal sehr schwach, kann der Additionsverlust in derartigen herkömmlichen, symmetrischen Addierern bei zwei Signalen 3 dB, d.h. 50% betragen. Bei vier Antennen und nur einem starken Signal kann der Additionsverlust auf 6 dB, d.h. 75% anwachsen. Gerade dann, wenn nur ein Signal in nennenswerter Stärke vorliegt, ist jedoch jede Leistungsreserve äußerst wichtig. Denn bei extrem ungleicher Antennenempfangsleistung ist ein stark gestörtes Feld anzunehmen, so daß gerade in diesem Fall Leistungsverluste besonders schädlich sind.

Wie ebenfalls bereits ausgeführt wurde, ist zur Behebung des beschriebenen Nachteils bei symmetrischen Addierern bereits vorgeschlagen worden, bei stark unterschiedlichen Eingangssignalpegeln und insbesondere dann, wenn eine der Eingangssignalspannungen Null oder nahezu Null ist, den Addierer außer Funktion setzen bzw. über einen Nebenweg zu umgehen, wie dies in Fig. 2 dargestellt ist. Im Falle, daß die beiden an den Eingängen 21 bzw. 22 anliegenden Signalspannungen nicht stark unterschiedlich sind, werden diese über die Schalter 23, 24 in der in Fig. 2 dargestellten Schalterstellung an die Eingänge 25, 26 der Addierstufe 25 geleitet, die das Summensignal am Ausgang 27 bereitstellt. Das Summensignal wird in der in Fig. 2 dargestellten Schalterstellung eines Dreifachschalters 28 zur weiteren Verarbeitung abgeführt. Sind dagegen die Eingangsspannungen an den Eingängen 21 und 22 stark unterschiedlich oder beispielsweise die am Eingang 22 anliegende Eingangsspannung Null oder nahezu Null, werden die Schalter 23 und 28 in die in Fig. 2 strichliniert dargestellte Schalterstellung gebracht, so daß die Addierstufe 25 umgangen wird. Das am Eingang 21 anliegende Signal wird also auf Grund der Tatsache, daß die Addierstufe 25 umgangen ist und keine Reflexion eines Teils der Summenleistung auf die Eingänge erfolgt, voll weitergegeben. Der Nachteil einer derartigen in Fig. 2 dargestellten Schaltung besteht jedoch darin, daß zwei Umschalter mit je zwei Kontakten und ein Umschalter mit drei Kontakten, also insgesamt sieben Kontakte erforderlich sind, die die Schaltung eines derartigen Addierers aufwendig machen. Darüber hinaus sind drei Schaltzustände möglich, was für eine digitale Ansteuerung nicht optimal ist. Durch das Abschalten eines Eingangssignals liegen bei einem Diversity-System mit Kennzeichnung der komplexen Amplituden der Eingangssignale durch eine Hilfsmodulation nicht immer Informationen über beide Eingangssignale vor, so daß bei Signalwiederkehr zuerst eine Vorbereitungsphase, zum Beispiel ein probeweises Zu- und Abschalten, durchlaufen werden muß. Abgesehen von dem höheren schaltungstechnischen Aufwand entstehen dadurch zusätzliche unerwünschte Knackgeräusche, die die Qualität des Addiererausgangssignals nachteilig beeinflussen. Die Zahl der Schaltkontakte kann zwar reduziert werden ; dadurch ergeben sich jedoch je nach Schalterstellung unterschiedliche Impedanzverhältnisse, die einen zusätzlichen erheblichen Schaltungsaufwand erfordern.

Fig. 3 zeigt ein Ausführungsbeispiel für einen erfindungsgemäßen Addierer mit zwei Eingängen. An den Eingängen 31, 32 liegen Eingangssignale mit den Leistungen $P_1$ bzw. $P_2$ an. An einem zwischen den Eingängen 31 und 32 liegenden Übertrager 33 sind zwei Abgriffe 34 und 35 vorgesehen, an denen die Signalleistungen $P_1'$ bzw. $P_2'$ entnommen werden können. Mittels eines Schalters 36 können die Abgriffe 34 bzw. 35 mit dem Ausgang 37 des erfindungsgemäßen Addierers wahlweise verbunden werden.

Auf Grund der beiden Abgriffe 34 und 35 des Übertragers 33 liegen je nach Schalterstellung des Schalters 36 am Ausgang 37 des Addierers unterschiedliche Summensignale an. Ist die Eingangssignalleistung $P_1$ am Eingang 31 größer als die Eingangssignalleistung $P_2$ am Eingang 32 oder ist die Eingangssignalleistung $P_2$ am Eingang 32 nahezu Null, wird der Schalter 36 in die in Fig. 3 dargestellte Schalterstellung, d.h. in einen spiegelsymmetrischen Betriebszustand, gebracht, so daß die ungleiche Gewichtung der Eingänge umgekehrt wird.

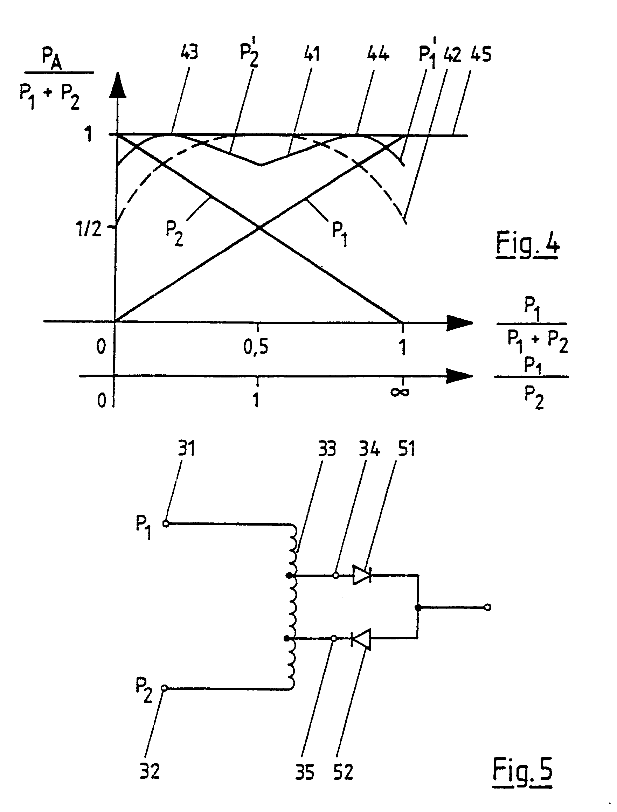

Anhand von Fig. 4 kann die Funktionsweise dieser erfindungsgemäßen Schaltungsanordnung noch deutlicher zum Ausdruck gebracht werden. Über dem Verhältnis der Eingangssignalleistungen $P_1/P_2$ ist die Ausgangssignalleistung des in Fig. 3 dargestellten Addierers durch die Kurve 41 wiedergegeben, die sich aus den beiden Kurventeilen $P_1'$ und $P_2'$ zusammensetzt. Zum Vergleich ist der in Fig. 1 dargestellte Kurvenverlauf der Ausgangsleistung P eines herkömmlichen, symmetrischen Addierers strichliniert dargestellt und mit dem Bezugszeichen 42 versehen.

Wie aus Fig. 4 ersichtlich ist, ist eine optimale, vollständige Leistungsaddition mit dem erfindungsgemäßen Addierer mit ungleicher Gewichtung der Eingänge an zwei Verhältniswerten $P_1/P_1$ der Eingangssignalleistungen, nämlich an den Kurvenpunkten 43 und 44 möglich, wogegen beim herkömmlichen Addierer eine vollständige Leistungsaddition nur in einem Falle, nämlich bei dem Spannungsverhältnis $P_1/P_2 = 1$ möglich ist. Über das gesamte Eingangssignal-Leistungsverhältnis $P_1/P_2$ hinweg ergibt sich auf diese Weise im Mittel eine wesentlich bessere Leistungsaddition mit dem erfindungsgemäßen Addierers, wenn eine Umschaltung der ungleich gewichteten Eingänge bei Umkehr des Verhältnisses der Eingangssignalleistungen erfolgt.

Fig. 5 zeigt eine Ausführungsform, bei der der in Fig. 3 dargestellte Schalter 36 aus Dioden 51 bzw. 52 besteht. Schaltungsteile, die denen von Fig. 3 entsprechen, sind in Fig. 4 mit denselben Bezugszeichen wie in Fig. 3 versehen.

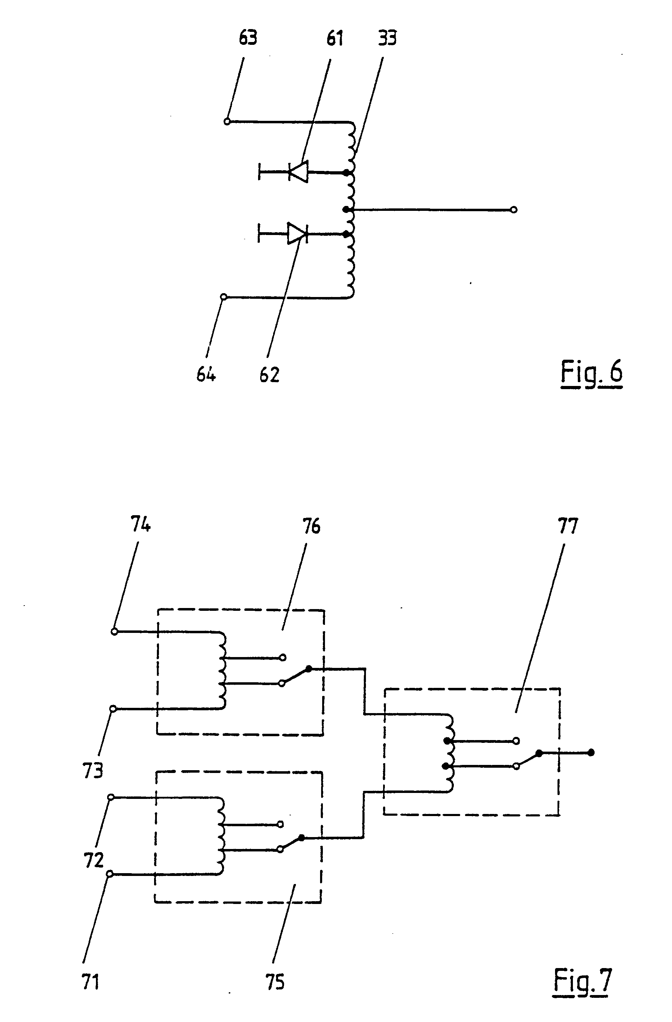

In Fig. 6 ist eine äquivalente Ausführungsform dargestellt, bei der die Dioden 61 und 62 gegen Masse geschaltet sind.

Fig. 7 zeigt schließlich eine Ausführungsform der Erfindung, bei der einzelne Addierstufen für zwei Eingänge gemäß Fig. 3 kaskadenartig zu einem Addierer mit vier Eingängen 71, 72, 73, 74 erweitert ist. Die Addierstufen 75, 76 und 77 entsprechen im wesentlichen dem in Fig. 3 dargestellten Addierer, wobei die Ausgänge der Addierstufen 75 und 76 die Eingänge der Addierstufe 77 darstellen. Selbstverständlich ist es möglich, die in Fig. 7 dargestellte Schaltungsanordnung in entsprechender Weise durch weitere Kaskadierung auf Addierer mit beliebig vielen Eingängen zu erweitern.

Die Erfindung wurde anhand von bevorzugten Ausführungsbeispielen erläutert. Dem Fachmann sind jedoch zahlreiche Abwandlungen und Ausgestaltungen möglich. Die erfindungsgemäßen Addierer können allgemein für Hochfrequenzsignale verwendet werden, die von einer Signalquelle auf wenigstens zwei unterschiedlichen Ausbreitungswegen zum Addierer gelangen. Die Hochfrequenzsignale können beispielsweise von einem Sender abgestrahlte Rundfunk- oder Fernsehsignale sein, sie können jedoch auch in Hohlleitern, Glasfasern oder sonstigen Leitungen mit mehreren unterschiedlichen Ausbreitungsmoden geführt sein.

## Patentansprüche

1. Addierer zur Leistungsaddition von wenigstens zwei Signalen, die über unterschiedliche Wege von einer gemeinsamen Signalquelle zu einer Empfangsschaltung gelangen, dadurch gekennzeichnet, daß der Addierer wenigstens zwei Eingänge (31, 32 ; 63, 64 ; 71-74), die mit ungleicher Gewichtung zum Ausgangssignal beitragen, aufweist, und daß ein Umschalter (36 ; 51, 52 ; 61, 62) zum Umschalten der Gewichtung vorgesehen ist.

2. Addierer nach Anspruch 1, dadurch gekennzeichnet, daß die Umschaltung der Gewichtung durch den Umschalter (36 ; 51, 52 ; 61, 62) in einen bezüglich des Verhältnisses ($P_1$ /$P_2$ ; Fig. 4) der an den Eingängen (31, 32 ; 63, 64 ; 71-74) anliegenden Eingangsleistungen spiegelsymmetrischen Betriebszustand erfolgt.

3. Addierer nach Anspruch 1 oder 2, dadurch gekennzeichnet, daß wenigstens ein zwischen den Eingängen (31, 32 ; 63, 64 ; 71-74) des Addierers vorgesehener Übertrager (33) wenigstens zwei unsymmetrische Abgriffe (34, 35) zur ungleichen Gewichtung der Eingänge des Addierers aufweist (Fig. 3 und 5).

4. Addierer nach einem der Ansprüche 1 bis 3, dadurch gekennzeichnet, daß der wenigstens eine Umschalter (36 ; 51, 52) die wenigstens zwei unsymmetrischen Abgriffe (34, 35) umschaltet (Fig. 3 und 5).

5. Addierer nach einem der Ansprüche 1 bis 4, dadurch gekennzeichnet, daß der wenigstens eine Umschalter (36) durch Dioden (51, 52 ; 61, 62) gebildet ist (Fig. 5 und 6).

6. Addierer nach einem der Ansprüche 1 bis 5, dadurch gekennzeichnet, daß ein Addierer mit mehr als zwei Eingängen (71-74) durch wenigstens zwei Addierer mit mehr als zwei Eingängen (71-74) durch wenigstens zwei Addierstufen (75, 76, 77) kaskadiert ist, wobei wenigstens einer zwischen ungleich gewichteten Zuständen umschaltbar ist (Fig. 7).

7. Addierer nach einem der Ansprüche 1 bis 6, dadurch gekennzeichnet, daß ein Prozessor vorgesehen ist, der die ungleiche Gewichtung der Eingänge des Addierers steuert und der die ungleiche Gewichtung der entsprechenden Eingangssignale bei der weiteren Auswertung korrigiert.

## Claims

1. Adder for power addition of at least two signals which reach a receiving circuit via different paths from a common signal source, characterized in that the adder comprises at least two inputs (31, 32 ; 63, 64 ; 71-74) which contribute with unequal weighting to the output signal and that a changeover switch (36 ; 51, 52 ; 61, 62) is provided for switching over the weighting.

2. Adder according to claim 1, characterized in that the switching over of the weighting by the changeover switch (36 ; 51, 52 ; 61, 62) is effected to an operating state mirror symmetrical with respect to the ratio ($P_1$/$P_2$; Fig. 4) of the input powers present at the inputs (31, 32 ; 63, 64 ; 71-74).

3. Adder according to claim 1 or 2, characterized in that at least one transformer (33) provided between the inputs (31, 32 ; 63, 64 ; 71-74) of the adder comprises at least two asymmetrical taps (34, 35) for unequal weighting of the inputs of the adder (Figs. 3 and 5).

4. Adder according to any one of claims 1 to 3, characterized in that the at least one changeover switch (36 ; 51, 52) switches over the at least two asymmetrical taps (34, 35) (Figs. 3 and 5).

5. Adder according to any one of claims 1 to 4, characterized in that the at least one changeover switch (36) is formed by diodes (51, 52 ; 61, 62) (Fig. 5 and 6).

6. Adder according to any one of claims 1 to 5, characterized in that an adder having more than two inputs (71-74) is cascaded by at least two adder stages (75, 76, 77), at least one being switchable between two unequally weighted states (Fig. 7).

7. Adder according to any one of claims 1 to 6, characterized in that a processor is provided which controls the unequal weighting of the inputs of the adder and which corrects the unequal weighting of the corresponding input signals in the further evaluation.

## Revendications

1. Additionneur pour réaliser l'addition des puissances d'au moins deux signaux, qui sont transmis, par des trajets différents, depuis une source commune de signaux à un circuit de réception, caractérisé en ce que l'additionneur comporte au moins deux entrées (31, 32 ; 63, 64 ; 71-74), qui contribuent, avec des pondérations différentes, à former le signal de sortie et qu'il est prévu un commutateur (36 ; 51, 52 ; 61, 62) servant à réaliser une commutation de la pondération.

2. Additionneur selon la revendication 1, caractérisé en ce que la commutation de la pondération est réalisée au moyen du commutateur (31 ; 51, 52 ; 61, 62) dans un état de fonctionnement symétrique pour ce qui concerne le rapport ($P_1/P_2$ ; figure 4) des puissances d'entrée appliquées aux entrées (31, 32 ; 63, 64 ; 71-74).

3. Additionneur selon la revendication 1 ou 2, caractérisé en ce qu'au moins un transformateur (33) prévu entre les entrées (31, 32 ; 63, 64 ; 71-74) de l'additionneur (figures 3 et 5).

4. Additionneur selon l'une des revendications 1 à 3, caractérisé en ce que le ou les commutateurs (36 ; 51, 52) commutent les prises dissymétriques qui sont au moins deux (34, 35) (figures 3 et 5).

5. Additionneur selon l'une des revendications 1 à 4, caractérisé en ce que le ou les commutateurs (36) sont formés par des diodes (51, 52 ; 61, 62) (figures 5 et 6).

6. Additionneur selon l'une des revendications 1 à 5, caractérisé en ce qu'un additionneur comportant plus de deux entrées (71-74) est formé par le branchement en cascade d'au moins deux étages additionneurs (75, 76, 77), dont l'un au moins peut être commuté entre des états pondérés différemment (figure 7).

7. Additionneur selon l'une des revendications 1 à 6, caractérisé en ce qu'il est prévu un processeur, qui commande la pondération différente des entrées de l'additionneur et corrige la pondération différente des signaux d'entrée correspondants, lors de l'évaluation ultérieure.

$$\frac{P_A}{P_1 + P_2}$$

$P_2$    $P_1$    $P$

1

1/2

0    0,5    1    $\dfrac{P_1}{P_1 + P_2}$

0    1    $\infty$    $\dfrac{P_1}{P_2}$

Fig.1

21    23    25    28

$P_1$

$P_2$

+

22    24    27

Fig.2

31    33    34    36    37

$P_1$

$P_1'$

$P_2'$

$P_2$

32    35

Fig.3

$$\frac{P_A}{P_1 + P_2}$$

43  $P_2'$  41  44  $P_1'$  42  45

1

1/2

$P_2$       $P_1$

Fig. 4

0       0,5       1       $\dfrac{P_1}{P_1 + P_2}$

0       1       ∞       $\dfrac{P_1}{P_2}$

31       33  34  51

$P_1$

$P_2$

32       35  52       Fig. 5

8

Fig. 6

Fig. 7